# FASCICULE DE BREVET EUROPEEN

(11) **EP 2 938 558 B1**
(45) Date de publication et mention de la délivrance du brevet: **09.11.2016**
(21) Numéro de dépôt: 13826883.4
(22) Date de dépôt: 20.12.2013
(51) Int. Cl.: B65D 81/26, B65D 77/06

(54) **DISPOSITIF DE TRANSFERT CONTRÔLÉ DE GAZ OU DE MOLÉCULES GAZEUSES VOLATILES DANS UN RÉCIPIENT DESTINÉ À CONTENIR UN PRODUIT ALIMENTAIRE LIQUIDE OU SEMI-LIQUIDE**
VORRICHTUNG ZUR KONTROLLIERTEN ÜBERTRAGUNG FLÜCHTIGER GASE ODER GASFÖRMIGER MOLEKÜLE IN EINEN BEHÄLTER ZUR AUFNAHME EINES FLÜSSIGEN ODER HALBFLÜSSIGEN LEBENSMITTELS
DEVICE FOR THE CONTROLLED TRANSFER OF VOLATILE GASES OR GASEOUS MOLECULES INTO A CONTAINER INTENDED TO CONTAIN A LIQUID OR SEMI-LIQUID FOOD PRODUCT

(30) Priorité: 31.12.2012 FR 1262995
(43) Date de publication de la demande: 04.11.2015
(73) Titulaire: Bio-Cork Sarl, 01160 Neuville-sur-Ain (FR)
(72) Inventeur: BONNEAU, Marc, F-07100 Annonay (FR); CALONE-BONNEAU, Marguerite, F-07100 Annonay (FR)
(74) Mandataire: Jeannet, Olivier
(86) Numéro de dépôt international: PCT/IB2013/061215
(87) Numéro de publication internationale: WO 2014/102691

(56) Documents cités:
- EP-A2- 0 799 773
- WO-A1-2007/130608
- GB-B- 2 401 862
- US-A- 5 092 914
- US-A1- 2011 139 670

## Description

La présente invention concerne un dispositif de transfert contrôlé de gaz ou de molécules gazeuses volatiles dans un récipient destiné à contenir un produit alimentaire liquide ou semi-liquide, en particulier du vin. Elle concerne également une fermeture d'un tel récipient, sous divers formats (capsule, couvercle, robinet), comprenant ce dispositif. Elle concerne aussi un procédé de fabrication d'un récipient comprenant une telle fermeture. Elle concerne en outre l'utilisation de ce dispositif dans la constitution de fermetures actives d'emballages utilisés pour conserver divers aliments et notamment des boissons et des produits alimentaires liquides.

Par l'expression "transfert contrôlé de gaz ou de molécules gazeuses volatiles, on entend le fait que le dispositif est apte soit à absorber un gaz ou des molécules gazeuses présents dans le produit alimentaire conditionné et dans l'environnement direct de ce produit, soit à diffuser un gaz ou des molécules gazeuses dans ce produit alimentaire et dans l'environnement direct de ce produit, sur une période de temps prolongée, en particulier la période de plusieurs semaines à plusieurs mois séparant fréquemment le remplissage du récipient et l'ouverture de ce récipient par le consommateur.

Le "produit alimentaire" en question est notamment du vin mais il peut également s'agir de bière ou de jus de fruits, ou de jus de légumes, ou, d'une manière générale, de produits alimentaires liquides ou semi-liquides.

Le terme "fermeture" désigne tout type de moyens destinés à clore un récipient, et en particulier un robinet destiné à équiper des emballages de boissons en matière synthétique souple connu sous les dénominations de poches et de "Bag-In-Box®».

Le terme "récipient", qui sera uniquement utilisé dans la présente description, doit être compris de manière la plus générale, comme désignant tous types de récipients, notamment des poches souples telles que celles utilisés pour les emballages de vin connus sous la dénomination "Bag-In-Box®", des cubitainers, des emballages cartonnés parallélépipédiques dits "briques", des conteneurs, des tonneaux, des barriques, des bouteilles, etc..

A côté des récipients traditionnels assurant simplement les fonctions de contention et de protection physique des produits alimentaires contre les facteurs environnementaux rencontrés tout au long du cycle de vie des produits, il existe également des récipients dits "actifs", comprenant des dispositifs d'absorption ou de diffusion d'un ou plusieurs produits actifs solides agissant de façon contrôlée sur l'aliment contenu afin d'en améliorer et d'en préserver la qualité tout au long de la chaine de distribution. Ces moyens de diffusion sont notamment contenus dans les parois et dans les systèmes de fermeture de ces récipients.

Les dispositifs existants concernent des produits actifs solides et ne sont pas conçus ni adaptés à réaliser une absorption ou une diffusion d'un gaz ou de molécules gazeuses dans un produit alimentaire liquide ou semi-liquide, de manière prolongée et contrôlée.

La présente invention a pour objectif principal de remédier à cette lacune.

Un autre objectif de l'invention est de fournir un dispositif permettant de transférer un gaz et/ou des molécules gazeuses volatiles de qualité alimentaire, notamment de l'oxygène (O₂), du gaz carbonique (CO₂), des sulfites (SO₂), de l'azote pur (N₂) ou composé (N₂O), de l'argon (Ar), ou des molécules aromatiques volatiles (terpénols, thiols, méthoxypyrazine, phényléthanol, esters et alcools) dans un récipient contenant un produit alimentaire liquide ou semi-liquide, qui permette un transfert parfaitement contrôlé de ces gaz et/ou de ces molécules volatiles, particulièrement entre le moment où le dispositif est fabriqué et le moment où le dispositif est placé au contact de l'aliment.

Selon l'invention, le dispositif comprend :
- une capsule rigide formant une chambre dont une extrémité longitudinale est ouverte, et formant un conduit longitudinal d'écoulement du produit alimentaire liquide ou semi-liquide ;
- un produit actif contenu dans ladite chambre, apte à absorber un gaz et/ou des molécules gazeuses volatiles présents dans ledit produit alimentaire ou à diffuser un gaz et/ou des molécules gazeuses volatiles dans ce produit alimentaire ;
- un capuchon de fermeture de ladite extrémité longitudinale ouverte de la chambre, comprenant un opercule perforable, ce capuchon étant apte, lorsqu'il est placé sur ladite capsule et que son opercule n'est pas perforé, à clore la chambre de manière étanche aux gaz et à l'eau, et permettant, lorsqu'il est perforé, un transfert de gaz et/ou de molécules gazeuses volatiles entre l'extérieur et l'intérieur de la chambre, et
- une membrane perméable aux gaz et/ou aux molécules gazeuses volatiles à absorber ou à diffuser, placée dans la chambre de manière à séparer le produit actif contenu dans la chambre vis-à-vis de l'extérieur.

Le dispositif est constitué en plaçant le produit actif dans la chambre puis en fixant la membrane sur l'ouverture de la chambre et en refermant cette chambre de manière étanche aux gaz et à l'eau au moyen du capuchon operculé.

A l'état de non perforation de l'opercule, le dispositif ne produit aucune absorption ni aucune diffusion de gaz et peut donc être stocké, éventuellement sur une durée prolongée, sans aucune altération de son efficacité future.

Pour sa mise en oeuvre, le dispositif est placé dans un logement aménagé au niveau du côté amont d'un robinet, sur le conduit d'écoulement que comprend ce robinet et en amont de l'organe d'arrêt de celui-ci, de telle sorte que le conduit longitudinal que forme la capsule communique avec le conduit d'écoulement que comprend le robinet et de telle sorte que ledit opercule soit situé sur le côté amont du robinet et accessible depuis l'extérieur du robinet ; l'opercule que comprend le capuchon est ainsi apte à être perforé juste avant le montage du robinet sur le récipient, afin de permettre, une fois le robinet monté sur le récipient, la mise en communication du produit alimentaire liquide ou semi-liquide et du produit actif contenu dans la chambre, au travers de l'opercule perforé et de ladite membrane.

Le dispositif de transfert contrôlé de gaz selon l'invention peut aussi présenter différentes dimensions de façon à s'adapter et prendre place dans l'espace cylindrique intérieur soit d'un col de bouteille, soit d'une fermeture (capsule, bouchon, couvercle) de tous type de récipient contenant des liquides alimentaires.

Le capuchon est avantageusement en matière synthétique moulée en une pièce, ledit opercule étant formé par un amincissement ce cette matière synthétique.

La capsule est avantageusement en matière synthétique moulée en une pièce, cette matière synthétique et celle constituant le capuchon étant thermoscellables l'une à l'autre.

Le capuchon peut ainsi être fixé à la capsule de manière étanche, par thermoscellage.

La membrane peut être indépendante du capuchon et être fixée à la capsule avant fixation du capuchon. De préférence toutefois, la membrane est solidaire du capuchon, en étant fixée à celui-ci en retrait dudit opercule de telle sorte que ce dernier puisse être perforé sans perforation de la membrane.

La fixation de la membrane à la capsule est ainsi réalisée de manière simple et rapide.

Ladite membrane peut être constituée de polyéthylène (PE), et/ou de polypropylène (PP), et/ou d'acide poly lactique (PLA) et autres polyesters, et/ou de polyamides, et/ou de polymères de vinyle alcool, et/ou de nylon, et/ou de Polyfluorure de polyvinylidène (PVDF), et/ou de Polytétrafluoroéthylène (PTFE), et/ou de Polyethersulfone (PES), et/ou de biopolymères (esters de celluloses).

La fermeture selon l'invention, notamment sous la forme d'un robinet, comprend un logement de réception du dispositif, aménagé au niveau du côté amont de la fermeture, sur le conduit d'écoulement que comprend cette fermeture et en amont d'un organe d'arrêt que comprend cette fermeture ; le dispositif est placé dans ce logement de telle sorte que le conduit longitudinal que forme la capsule communique avec le conduit d'écoulement que comprend la fermeture et de telle sorte que ledit opercule soit situé sur le côté amont de la fermeture et accessible depuis l'extérieur de la fermeture.

Lorsque ladite capsule et la partie de la fermeture délimitant ledit logement de réception ont des sections transversales semi-circulaires, et que, donc, il est nécessaire de positionner angulairement la capsule dans le logement de réception, la capsule comprend une saillie longitudinale apte à être insérée de manière ajustée dans la partie du conduit d'écoulement que comprend la fermeture, au-delà dudit logement de réception.

Cette insertion ajustée permet de réaliser le positionnement angulaire de la capsule dans ledit logement de réception lors de l'insertion de cette capsule dans ce logement.

De manière plus générale l'invention concerne aussi tout autre format de capsule qui s'insère dans le conduit de la fermeture et qui comporte au moins un conduit latéral d'écoulement du produit alimentaire liquide conditionné.

Le procédé selon l'invention, de fabrication d'un récipient destiné à contenir un produit alimentaire liquide ou semi-liquide et destiné à être équipé d'une fermeture d'écoulement de ce liquide, comprend les étapes consistant à :
- insérer le dispositif dans le logement de réception que comprend la fermeture, en plaçant ce dispositif dans ce logement de telle sorte que le conduit longitudinal que forme la capsule communique avec le conduit d'écoulement que comprend la fermeture et de telle sorte que ledit opercule soit situé sur le côté amont de la fermeture et soit accessible depuis l'extérieur de la fermeture ;
- simultanément ou postérieurement à cette insertion, perforer ledit opercule ; et
- assembler la fermeture, ainsi équipée du dispositif, sur le récipient, afin de permettre la mise en communication du produit alimentaire liquide ou semi-liquide et du produit actif contenu dans la chambre, au travers de l'opercule perforé et de ladite membrane.

La machine selon l'invention de mise en oeuvre de ce procédé comprend :
- une pince de saisie du dispositif et d'insertion de ce dispositif dans le logement de réception que comprend la fermeture, et
- un poinçon situé en regard dudit opercule lorsque le dispositif est saisi par la pince, ce poinçon étant mobile entre une position de retrait ne gênant pas la saisie du dispositif par la pince et une position avancée de perforation de l'opercule.

En ce qui concerne le produit actif, selon une première possibilité, le dispositif est un dispositif d'absorption de l'oxygène présent dans le récipient et/ou dans le produit alimentaire liquide ; ledit produit actif est alors avantageusement formé d'un mélange comprenant 40 à 60% de tanins oenologiques réducteurs tels que proanthocyanidines, flavonoïdes, gallotanins, ellagitanins, phlorotannins, sous formes de poudres et/ou de particules, de copeaux ou de fragments de bois de chêne, et de 60 à 40% de levures oenologiques sèches et inactivées du genre Saccharomyces ; ladite membrane est alors perméable à l'oxygène et à l'eau.

La capacité de la poudre à absorber l'oxygène ambiant dans un tel emballage est d'environ 3000 nmol d'O₂ par gramme de poids sec de poudre. Le dispositif permet ainsi d'absorber progressivement, de manière régulée et continue, l'oxygène interne de l'emballage et de réduire en conséquence le risque d'oxydation dénaturante de la boisson conditionnée, sur plusieurs mois. Il intervient ainsi dans la conservation des caractéristiques organoleptiques et dans la qualité de cette boisson.

Ladite membrane est notamment une membrane hydrophile en PVDF ayant des pores de 0,22µ, telle que celle commercialisée par la société Merck-Millipore.

De préférence, la poudre contient un mélange de 50% de tanins oenologiques réducteurs et de 50% de levures inactivées.

Selon une deuxième possibilité, le dispositif est un dispositif de diffusion d'azote dans le produit alimentaire liquide ou semi-liquide ; ledit produit actif est alors avantageusement de l'azote liquide.

Le dispositif ainsi constitué diffuse le gaz d'inertage dans le récipient, ce qui entraine la dilution relative de l'oxygène ambiant, réduit en conséquence le risque d'oxydation dénaturante de la boisson conditionnée et augmente la durée de conservation.

Selon une troisième possibilité, le dispositif selon l'invention est un dispositif diffuseur de dioxyde de carbone dans le produit alimentaire liquide ou semi-liquide ; ledit produit actif est alors avantageusement formé de granulés effervescents obtenus à partir du mélange de poudres suivant :

| | |
|---|---|
| - bicarbonate de soude | 100 g |
| - acide ascorbique | 50 g. |

Ladite membrane peut également être dans ce cas une membrane hydrophile en PVDF ayant des pores de 0,22µ, telle que celle commercialisée par la société PAL

Selon une quatrième possibilité, le dispositif selon l'invention est également un dispositif diffuseur de dioxyde de carbone dans le produit alimentaire liquide ou semi-liquide ; ledit produit actif est alors avantageusement formé de granulats de carboglace.

Selon une cinquième possibilité, le dispositif selon l'invention est un dispositif diffuseur de dioxyde de soufre dans le produit alimentaire liquide ou semi-liquide ; ledit produit actif est alors avantageusement formé par un gel résultant du mélange suivant :

| | |
|---|---|
| - agarose grade alimentaire : | 20 g, |
| - métabisulfite de potassium : | 20 g, |
| - eau distillée : qsp | 1000 ml |

Dans cette cinquième possibilité de produit actif, ladite membrane est de préférence une membrane hydrophobe en PTFE ayant des pores de 0,1 µ, notamment commercialisée par la société Merck-Millipore.

Ce dispositif est notamment destiné à être fixé dans le col d'un robinet de conteneur de boissons (vins, cidres, bières, jus de fruits et de légumes, sirops de fruits); il permet par exemple une libération lente et régulière du dioxyde de soufre contenu dans la chambre et sa diffusion à raison de 0,5 mg par jour au travers de la membrane vers un vin conditionné, dans lequel se maintient ainsi une concentration de dioxyde de soufre toujours supérieure à 10 mg/L. Cette concentration comprise entre 10 et 30 mg/L pendant plusieurs mois confère au vin une protection antioxydante et antiseptique de longue durée favorable à son circuit de commercialisation.

Selon une variante de ce dispositif diffuseur de dioxyde de soufre, ledit produit actif est formé d'un mélange d'un ou plusieurs sulfites (E220 à E228), inclus dans un gel de polysaccharides naturels, seuls ou associés, tels qu'alginates, ou amidons, ou carraghénanes, ou celluloses et hémicelluloses, ou fructanes, ou gomme arabique, ou gomme xanthane, ou glucanes, ou galactanes, ou glycans ou pectines. De manière alternative le mélange peut être formé de sulfites incorporés dans un gel de protéines telles que par exemple gélatine, ovalbumine ou caséine. Ladite membrane peut, en variante de ce qui est mentionné plus haut, être en polyéthylène (PE), en polypropylène (PP), en acide polylactique (PLA) et autres polyesters, en polyamides, en polymères de vinyle alcool, en nylon, en Polyfluorure de polyvinylidène (PVDF), en Polytétrafluoroéthylène (PTFE), en Polyethersulfone (PES), en bio polymères (esters de celluloses).

De manière plus générale, ladite chambre peut contenir, sous formes pures ou associées, des gaz tels que O₂, CO₂, SO₂, N₂, N₂O, Ar, He, et /ou des molécules aromatiques volatiles tels que terpénols, thiols, méthoxypyrazine, phényléthanol, sulfure de diméthyle, esters et alcools volatils, mélangés à des composés naturels séquestreurs tels que agaroses, alginates, amidons, carraghénanes, celluloses et hémicelluloses, fructanes, gomme arabique, gomme xanthane, glucanes, galactanes, glycans, pectines ou paraffine.

L'invention sera bien comprise, et d'autres caractéristiques et avantages de celle-ci apparaîtront, en référence au dessin schématique annexé, représentant, à titre d'exemple non limitatif, une forme de réalisation du dispositif de transfert et du robinet concernés.
La figure 1 est une vue en perspective d'une capsule que comprend le dispositif, par le côté inférieur de cette capsule ;
la figure 2 est une vue en coupe transversale d'un capuchon de fermeture que comprend également ce dispositif ;
la figure 3 est une vue de la capsule en coupe passant par le plan médian longitudinal de cette capsule ;
la figure 4 est une vue de côté, avec coupe partielle, d'un robinet destiné à équiper un emballage de vin connu sous la dénomination "Bag-In-Box®" ;
la figure 5 est une vue du dispositif en coupe longitudinale, formé par la capsule et le capuchon ;
la figure 6 est une vue du dispositif similaire à la figure 5 et du robinet similaire à la figure 4, au cours de la mise en place du dispositif dans le robinet, cette figure 6 montrant également, de manière très schématique, une pince de saisie et d'insertion, en position de saisie et d'insertion du dispositif, et un poinçon de perforation d'un opercule que comprend le couvercle, en position de retrait ;
la figure 7 est une vue du dispositif et du robinet similaire à la figure 6, la pince étant dans une position de retrait et le poinçon étant dans une position avancée de perforation ; et
la figure 8 est une vue du dispositif et du robinet similaire à la figure 7, après montage sur un récipient et remplissage de ce récipient par un liquide alimentaire liquide ou semi-liquide.

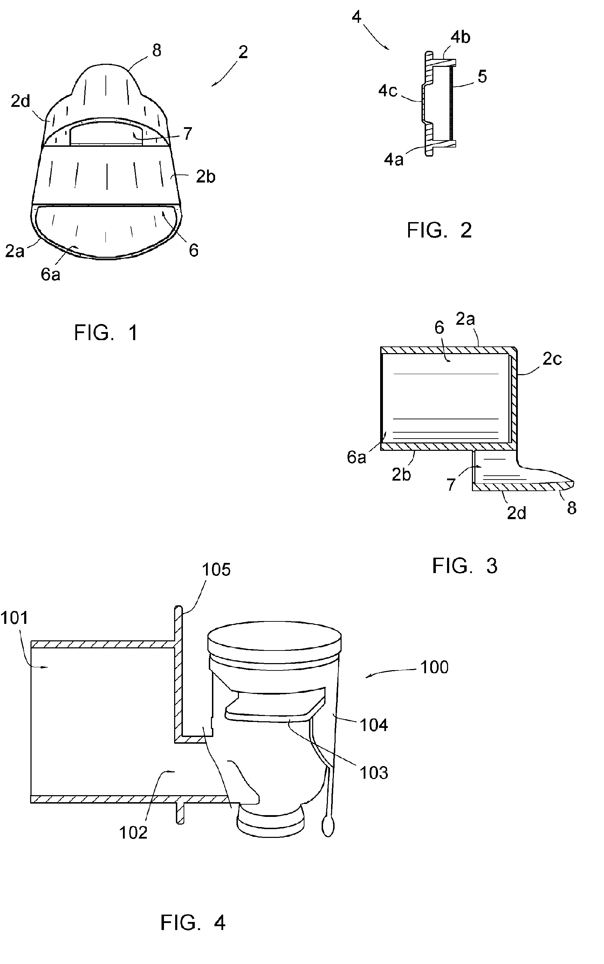

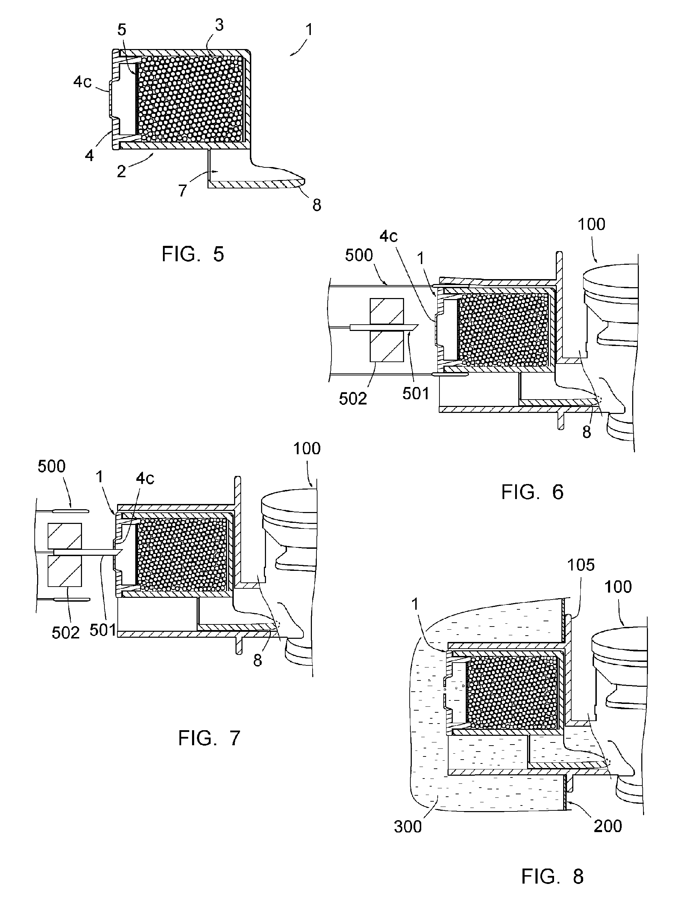

La figure 5 représente un dispositif 1 de transfert contrôlé d'un gaz dans un récipient destiné à contenir un produit alimentaire liquide ou semi-liquide, ce dispositif 1 étant destiné à être inséré dans un robinet 100, visible sur les figures 4 et 6 à 8, lui-même destiné à être fixé sur la paroi du récipient 200, visible sur la figure 8, ce récipient contenant un produit alimentaire liquide ou semi-liquide 300, en particulier du vin.

Le dispositif 1 comprend une capsule 2, un produit actif 3, un capuchon de fermeture 4 et une membrane 5, qui, dans l'exemple représenté, est solidaire du capuchon 4.

Comme le montrent plus particulièrement les figures 1 et 3, la capsule 2 forme une chambre 6 dont une extrémité longitudinale 6a est ouverte, un conduit longitudinal 7 et un bec longitudinal 8 faisant saillie du côté longitudinal opposé à l'extrémité longitudinale 6a.

La chambre 6 est délimitée par une paroi 2a de forme sensiblement cylindrique tronquée, une paroi plane 2b et une paroi de fond 2c fermant l'extrémité de la chambre 6 opposée à l'extrémité ouverte 6a.

Le conduit longitudinal 7 est délimité par une paroi arrondie 2d de la capsule 2, venant prolonger la paroi 2a du côté de la paroi de fond 2c pour former une portion de la capsule ayant une section transversale circulaire.

Cette portion de section transversale circulaire est dimensionnée de manière à pouvoir être engagée de façon ajustée dans un logement 101 de forme cylindrique correspondante que forme le robinet 100, ainsi que le montrent les figures 4 et 6 à 8. Ce logement 101 est situé sur l'extrémité amont du robinet 100 (par rapport au sens d'écoulement du vin au travers du robinet 100) et communique avec le conduit 102 d'écoulement du vin au travers du robinet.

Le bec longitudinal 8 prolonge la paroi 2d en regard du conduit 7. Il a une forme arrondie de même rayon que cette paroi 2d et présente un contour courbe. Ce bec 8 est dimensionné de manière à pouvoir être inséré de façon ajusté dans le conduit 102, sa forme permettant de faiblement réduire la section de ce conduit tout en assurant le positionnement angulaire de la capsule 2, et donc du dispositif 1, dans le logement 101.

La capsule 2 est moulée en une pièce, en une matière synthétique thermoscellable.

Le produit actif 3 est représenté sous forme de granulés dans l'exemple montré sur les figures 5 à 8. Il peut notamment s'agir, lorsque le dispositif 1 est destiné à diffuser du dioxyde de carbone dans le produit alimentaire liquide ou semi-liquide 300, de granulés effervescents obtenus à partir du mélange de100 g de bicarbonate de soude et de 50 g d'acide ascorbique.

Comme visible sur les figures 2 et 5, le capuchon 4 comprend une paroi d'extrémité 4a dimensionnée de manière à venir recouvrir le bord de la paroi 2a délimitant l'extrémité ouverte 6a, et une jupe 4b dimensionnée de manière à pourvoir être engagée étroitement dans la chambre 6. La paroi 4a comprend une portion centrale amincie formant un opercule 4c étanche à l'eau et au gaz, mais perforable par un poinçon.

Le capuchon 4 est moulé en une pièce, en une matière synthétique thermoscellable permettant un thermoscellage avec la matière de la capsule 2.

La membrane 5 est perméable au dioxyde de carbone mais imperméable à l'eau. Elle est fixée à la jupe 4b, en retrait de l'opercule 4c, de sorte que ce dernier puisse être perforé sans perforation de cette membrane 5, comme visible sur la figure 7.

Le dispositif 1 est constitué en plaçant le produit actif 3 dans la chambre 6 puis en insérant le capuchon 4 dans l'extrémité ouverte 6a, comme visible sur la figure 5, et en thermoscellant ce capuchon sur la paroi 2a. La chambre 6 est ainsi refermée de manière étanche aux gaz et à l'eau, de sorte que le dispositif 1 peut être stocké, éventuellement sur une durée prolongée, sans aucune altération de son efficacité future de diffusion de gaz.

Le robinet 100, à part le logement 101, est de type classique, comprenant une double palette 103 de manoeuvre de l'organe d'arrêt qu'il comprend et une ceinture arrachable 104, de blocage de cette palette 103 avant ouverture du récipient 200. Il comprend également une bride 105 permettant sa liaison avec la paroi de ce récipient 200, comme visible sur la figure 8.

Les figures 6 et 7 représentent, de manière très schématique, une pince 500 et un poinçon 501 faisant partie d'une machine permettant d'insérer de façon mécanisée le dispositif 1 dans le logement 101 du robinet 100 et d'activer la diffusion du gaz par la perforation de l'opercule 4c. La pince 500 comprend deux mors permettant de saisir le dispositif 1 et de l'insérer dans le logement 101, avec insertion du bec 8 dans le conduit 102, comme visible sur la figure 6. Le poinçon 501, situé entre ces mors, est alors dans une position de retrait ne gênant pas la saisie du dispositif 1 par la pince 500.

Une fois le dispositif 1 en place dans le logement 102, la pince 500 est légèrement ouverte et amenée dans une position de retrait, puis le poinçon 501, guidé par un bloc 502, est actionné vers une position avancée de perforation de l'opercule 4c, comme visible sur la figure 7.

Le robinet 100, ainsi équipé du dispositif 1, est ensuite assemblé à l'enveloppe formant le récipient 200, par thermo-soudage de la bride 105 à cette enveloppe, puis l'enveloppe est remplie avec le produit alimentaire liquide ou semi-liquide 300. Ce dernier vient au contact de produit actif 3 au travers de l'opercule 4c perforé et de la membrane 5, comme visible sur la figure 8, ce qui génère la diffusion du gaz dans ce produit 300.

Ainsi que cela apparaît de ce qui précède, l'invention fournit un dispositif de transfert contrôlé de gaz dans un récipient destiné à contenir un produit alimentaire liquide ou semi-liquide, présentant des avantages déterminants précités par rapport à la technique antérieure. Elle fournit également un robinet d'un tel récipient, comprenant ce dispositif, un procédé de fabrication d'un récipient comprenant un tel robinet, et une machine de mise en oeuvre de ce procédé.

L'invention a été décrite ci-dessus en référence à une forme de réalisation donnée à titre d'exemple. Il va de soi qu'elle n'est pas limitée à cette seule forme de réalisation.

## Revendications

1. Dispositif (1) de transfert contrôlé de gaz ou de molécules gazeuses volatiles dans un récipient (200) destiné à contenir un produit alimentaire liquide ou semi-liquide (300), **caractérisé en ce qu'**il comprend :
- une capsule rigide (2) formant une chambre (6) dont une extrémité longitudinale (6a) est ouverte, et formant un conduit longitudinal (7) d'écoulement du produit alimentaire liquide ou semi-liquide (300) ;
- un produit actif (3) contenu dans ladite chambre (6), apte à absorber un gaz et /ou des molécules gazeuses volatiles présents dans ledit produit alimentaire (300), ou à diffuser un gaz et/ou des molécules gazeuses volatiles dans ledit produit alimentaire (300) ;
- un capuchon (4) de fermeture de ladite extrémité longitudinale ouverte (6a) de la chambre (6), comprenant un opercule perforable (4c), ce capuchon (4) étant apte, lorsqu'il est placé sur ladite capsule (2) et que son opercule (4c) n'est pas perforé, à clore la chambre (6) de manière étanche aux gaz et à l'eau, et permettant, lorsqu'il est perforé, un transfert de gaz et/ou des molécules gazeuses volatiles entre l'extérieur et l'intérieur de la chambre (6), et
- une membrane (5) perméable aux gaz et/ou aux molécules gazeuses volatiles à absorber ou à diffuser, placée dans la chambre (6) de manière à séparer le produit actif (3) contenu dans la chambre (6) vis-à-vis de l'extérieur.

2. Dispositif (1) selon la revendication 1, **caractérisé en ce que** le capuchon (4) est en matière synthétique moulée en une pièce, ledit opercule (4c) étant formé par un amincissement de cette matière synthétique.

3. Dispositif (1) selon la revendication 2, **caractérisé en ce que** la capsule (2) est en matière synthétique moulée en une pièce et **en ce que** cette matière synthétique et celle constituant le capuchon (4) sont thermoscellables l'une à l'autre.

4. Dispositif (1) selon l'une des revendications 1 à 3, **caractérisé en ce que** la membrane (5) est solidaire du capuchon (4), en étant fixée à celui-ci en retrait dudit opercule (4c) de telle sorte que ce dernier puisse être perforé sans perforation de la membrane (5).

5. Dispositif (1) selon la revendication 4, **caractérisé en ce que** ladite membrane est constituée de polyéthylène (PE), et/ou de polypropylène (PP), et/ou d'acide poly lactique (PLA) et autres polyesters, et/ou de polyamides, et/ou de polymères de vinyle alcool, et/ou de nylon, et/ou de Polyfluorure de polyvinylidène (PVDF), et/ou de Polytétrafluoroéthylène (PTFE), et/ou de Polyethersulfone (PES), et/ou de biopolymères (esters de celluloses).

6. Fermeture destinée à équiper un récipient (200) pour produit alimentaire liquide ou semi-liquide (300), notamment sous la forme d'un robinet (100), **caractérisée en ce qu'**elle comprend un logement (101) de réception du dispositif (1) selon l'une des revendications 1 à 4, aménagé au niveau du côté amont de la fermeture, sur le conduit d'écoulement (102) que comprend cette fermeture et en amont d'un organe d'arrêt que comprend cette fermeture, le dispositif (1) étant placé dans ce logement (101) de telle sorte que le conduit longitudinal (7) que forme la capsule (2) communique avec le conduit d'écoulement (102) que comprend la fermeture et de telle sorte que ledit opercule (4c) soit situé sur le côté amont de la fermeture et accessible depuis l'extérieur de la fermeture.

7. Ensemble formé par le dispositif (1) selon l'une des revendications 1 à 5 et par la fermeture selon la revendication 6, **caractérisé en ce que** ladite capsule (2) et la partie de la fermeture délimitant ledit logement de réception (101) ont des sections transversales circulaires, et **en ce que** la capsule (2) comprend une saillie longitudinale (8) apte à être insérée de manière ajustée dans la partie du conduit d'écoulement (102) que comprend la fermeture, au-delà dudit logement de réception (101).

8. Procédé de fabrication d'un récipient (200) destiné à contenir un produit alimentaire liquide ou semi-liquide (300), comprenant une fermeture selon la revendication 6 ou la revendication 7, cette fermeture étant équipée d'un dispositif (1) selon l'une des revendications 1 à 5, **caractérisé en ce qu'**il comprend les étapes consistant à :
- insérer le dispositif (1) dans le logement de réception (101) que comprend la fermeture, en plaçant ce dispositif (1) dans ce logement de telle sorte que le conduit longitudinal (7) que forme la capsule (2) communique avec le conduit d'écoulement (102) que comprend la fermeture et de telle sorte que ledit opercule (4c) soit situé sur le côté amont de la fermeture et accessible depuis l'extérieur de la fermeture ;
- simultanément ou postérieurement à cette insertion, perforer ledit opercule (4c) ; et
- assembler la fermeture, ainsi équipée du dispositif (1), sur le récipient (200), afin de permettre la mise en communication du produit alimentaire liquide (300) et du produit actif (3) contenu dans la chambre (6), au travers de l'opercule (4c) perforé et de ladite membrane (5).

9. Dispositif (1) selon l'une des revendications 1 à 5, caractérisé en ce qu"il est un dispositif d'absorption de l'oxygène présent dans le récipient (200) et/ou dans le produit alimentaire liquide ou semi-liquide (300), et en ce que ledit produit actif est formé d'un mélange comprenant 40 à 60% de tanins oenologiques réducteurs tels que proanthocyanidines, flavonoïdes, gallotanins, ellagitanins, phlorotannins, sous forme de poudres et/ou sous formes de particules ou de fragments de bois de chênes, et de 60 à 40% de levures oenologiques sèches et inactivées du genre Saccharomyces; ladite membrane (5) est alors perméable à l'oxygène et à l'eau.

10. Dispositif (1) selon l'une des revendications 1 à 5, caractérisé en ce qu"il est un dispositif de diffusion d'azote dans le produit alimentaire liquide ou semi-liquide et en ce que ledit produit actif est de l'azote liquide.

11. Dispositif (1) selon l'une des revendications 1 à 5, caractérisé en ce qu"il est un dispositif diffuseur de dioxyde de carbone dans le produit alimentaire liquide ou semi-liquide (300), et en ce que ledit produit actif (3) est formé de granulés effervescents obtenus à partir du mélange de poudres suivant :
| | |
|---|---|
| - bicarbonate de soude | 100 g |
| - acide ascorbique | 50 g. |

12. Dispositif (1) selon l'une des revendications 1 à 5, caractérisé en ce qu"il est un dispositif diffuseur de dioxyde de carbone dans le produit alimentaire liquide ou semi-liquide et en ce que ledit produit actif est formé de granulats de carboglace.

13. Dispositif (1) selon l'une des revendications 1 à 5, caractérisé en ce qu"il est un dispositif diffuseur de dioxyde de soufre dans le produit alimentaire liquide ou semi-liquide et en ce que ledit produit actif est formé par un gel résultant du mélange suivant :
| | |
|---|---|
| - agarose grade alimentaire : | 20 g, |
| - métabisulfite de potassium : | 20 g, |
| - eau distillée : qsp | 1000 ml |

14. Dispositif (1) selon l'une des revendications 1 à 5, caractérisé en ce qu"il est un dispositif actif diffuseur de dioxyde de soufre dans le produit alimentaire liquide ou semi-liquide et en ce que ledit produit actif est formé soit d'un mélange de sulfites (E220-E228) avec des polysaccharides naturels tels que agaroses, alginates, amidons, carraghénanes, celluloses et hémicelluloses, fructanes, glucanes, galactanes, glycans ou pectines, soit d'un mélange de sulfites avec des protéines telles que gélatine, ovalbumine ou caséine.

15. Dispositif selon l'une des revendications 1 à 5, **caractérisé en ce que** ladite chambre contient, sous formes pures ou associées, des gaz tels que O₂, CO₂, SO₂, N₂, N₂O, Ar, He, et /ou des molécules aromatiques volatiles tels que terpénols, thiols, méthoxypyrazine, phényléthanol, sulfure de diméthyle, esters et alcools volatils, mélangés à des composés naturels séquestreurs tels que agaroses, alginates, amidons, carraghénanes, celluloses et hémicelluloses, fructanes, gomme arabique, gomme xanthane, glucanes, galactanes, glycans, pectines ou paraffine.

16. Utilisation d'un dispositif selon l'une des revendications 1 à 5 ou 9 à 15 dans la constitution de fermetures actives pour divers types de récipients de dimensions variables servant à conditionner des produits alimentaires liquides ou semi-liquides.

## Patentansprüche

1. Vorrichtung (1) zur kontrollierten Übertragung von Gas oder flüchtigen gasförmigen Molekülen in ein Behältnis (200), das dafür bestimmt ist, ein flüssiges oder halbflüssiges Nahrungsmittelprodukt (300) zu enthalten, **dadurch gekennzeichnet, dass** die Vorrichtung umfasst:
- eine starre Kapsel (2), die eine Kammer (6), von der ein Längsende (6a) offen ist, bildet, und die einen länglichen Kanal (7) für den Abfluss des flüssigen oder halbflüssigen Nahrungsmittelprodukts (300) bildet;
- einen Wirkstoff (3), der in der Kammer (6) enthalten ist, der geeignet ist, ein Gas und/oder flüchtige gasförmige Moleküle, die in dem Nahrungsmittelprodukt (300) vorhanden sind, zu absorbieren, oder ein Gas und/oder flüchtige gasförmige Moleküle in dem Nahrungsmittelprodukt (300) zu verteilen;
- eine Kappe (4) für einen Verschluss des offenen Längsendes (6a) der Kammer (6), umfassend einen perforierbaren Deckel (4c), wobei die Kappe (4) geeignet ist, wenn sie auf der Kapsel (2) angeordnet ist und ihr Deckel (4c) nicht perforiert ist, die Kammer (6) derart zu verschließen, dass sie gas- und wasserdicht ist, und, wenn er perforiert ist, eine Übertragung von Gas und/oder flüchtigen gasförmigen Molekülen (2) zwischen dem Äußeren und dem Inneren der Kammer (6) zu erlauben, und
- eine Membran (5), die für Gas und/oder flüchtige gasförmige Moleküle zum Absorbieren oder zum Verteilen permeabel ist, die derart in der Kammer (6) angeordnet ist, dass sie den Wirkstoff (3), der in der Kammer (6) enthalten ist, gegenüber dem Äußeren abtrennt.

2. Vorrichtung (1) gemäß Anspruch 1, **dadurch gekennzeichnet, dass** die Kappe (4) aus einem synthetischen Werkstoff, der in einem Stück gegossen ist, besteht, wobei der Deckel (4c) durch eine Verjüngung dieses synthetischen Werkstoffs gebildet ist.

3. Vorrichtung (1) gemäß Anspruch 2, **dadurch gekennzeichnet, dass** die Kapsel (2) aus einem synthetischen Werkstoff, der in einem Stück gegossen ist, besteht, und dass dieser synthetische Werkstoff und der, der die Kappe (4) bildet, miteinander wärmeversiegelbar sind.

4. Vorrichtung (1) gemäß einem der Ansprüche 1 bis 3, **dadurch gekennzeichnet, dass** die Membran (5) fest mit der Kappe (4) verbunden ist, wobei sie an dieser in einem Rückversatz des Deckels (4c) derart befestigt ist, dass der letztere ohne Perforation der Membran (5) perforiert werden kann.

5. Vorrichtung (1) gemäß Anspruch 4, **dadurch gekennzeichnet, dass** die Membran aus Polyethylen (PE), und/oder aus Polypropylen (PP), und/oder aus Polylactiden (PLA) und anderen Polyestern, und/oder aus Polyamiden, und/oder aus Polymeren von Vinylalkohol, und/oder aus Nylon, und/oder aus Polyvinylidenfluorid (PVDF), und/oder aus Polytetrafluorethylen (PTFE), und/oder aus Polyethersulfon (PES), und/oder aus Biopolymeren (Celluloseester) besteht.

6. Verschluss, der dafür bestimmt ist, ein Behältnis (200) für ein flüssiges oder halbflüssiges Nahningsmittelprodukt (300) zu versehen, insbesondere in Form eines Schließhahns (100), **dadurch gekennzeichnet, dass** der Verschluss eine Behausung (101) für eine Aufnahme der Vorrichtung (1) gemäß einem der Ansprüche 1 bis 4 umfasst, die auf Höhe der Zustromseite des Verschlusses, auf dem Abflusskanal (102), den dieser Verschluss umfasst, und vorgelagert zu einem Absperrorgan, das dieser Verschluss umfasst, angeordnet ist, wobei die Vorrichtung (1) derart in der Behausung (101) angeordnet ist, dass der längliche Kanal (7), den die Kapsel (2) bildet, mit dem Abflusskanal (102), den der Verschluss umfasst, in Verbindung steht, und derart, dass der Deckel (4c) auf der Zustromseite des Verschlusses und von dem Äußeren des Verschlusses zugänglich angeordnet ist.

7. Einheit, die durch die Vorrichtung (1) gemäß einem der Ansprüche 1 bis 5 und durch den Verschluss gemäß Anspruch 6 gebildet ist, **dadurch gekennzeichnet, dass** die Kapsel (2) und der Teil des Verschlusses, der die Aufnahmebehausung (101) begrenzt, kreisförmige Querschnitte haben und dadurch, dass die Kapsel (2) einen länglichen Vorsprung (8) umfasst, der geeignet ist, in einer ausgerichteten Weise in dem Teil des Abflusskanals (102), den der Verschluss umfasst, jenseits der Aufnahmebehausung (101) eingefügt zu sein.

8. Verfahren zur Herstellung eines Behältnisses (200), das dafür bestimmt ist, ein flüssiges oder halbflüssiges Nahningsmittelprodukt (300) zu enthalten und einen Verschluss gemäß Anspruch 6 oder Anspruch 7 umfasst, wobei dieser Verschluss mit einer Vorrichtung (1) gemäß einem der Ansprüche 1 bis 5 versehen ist, **dadurch gekennzeichnet, dass** das Verfahren die Schritte umfasst, die bestehen aus:
- Einfügen der Vorrichtung (1) in die Aufnahmebehausung (101), die der Verschluss umfasst, wobei die Vorrichtung (1) in der Behausung derart angeordnet wird, dass der längliche Kanal (7), den die Kapsel (2) bildet, mit dem Abflusskanal (102), den der Verschluss umfasst, in Verbindung steht, und derart, dass der Deckel (4c) auf der Zustromseite des Verschlusses und von dem Äußeren des Verschlusses zugänglich angeordnet ist;
- gleichzeitig oder nach dieser Einfügung, Perforieren des Deckels (4c); und
- Montieren des Verschlusses, der auf diese Weise mit der Vorrichtung (1) versehen ist, auf das Behältnis (200), um das Sich-In-Verbindung-Setzen des Nahrungsmittelprodukts (300) und des Wirkstoffs (3), der in der Kammer (6) enthalten ist, durch den perforierten Deckel (4c) und die Membran (5) hindurch zu ermöglichen.

9. Vorrichtung (1) gemäß einem der Ansprüche 1 bis 5, **dadurch gekennzeichnet, dass** die Vorrichtung eine Vorrichtung zur Absorption von Sauerstoff, der in dem Behältnis (200) und/oder in dem flüssigen oder halbflüssigen Nahningsmittelprodukt (300) vorhanden ist, ist, und dadurch, dass der Wirkstoff aus einem Gemisch gebildet ist, das 40 bis 60% önologische Tannine als Reduktionsmittel wie zum Beispiel Proanthocyanidine, Flavonoide, Gallotannine, Ellagitannine, Phlorotannine, in Form von Pudern und/oder in Form von Partikeln oder Eichenholzfragmenten, und 40 bis 60% getrocknete oder inaktivierte önologische Hefen der Gattung Saccharomyces umfasst; wobei die Membran (5) dann permeabel für Sauerstoff und Wasser ist.

10. Vorrichtung (1) gemäß einem der Ansprüche 1 bis 5, **dadurch gekennzeichnet, dass** die Vorrichtung eine Vorrichtung zur Verteilung von Stickstoff in dem flüssigen oder halbflüssigen Nahningsmittelprodukt ist, und dadurch, dass der Wirkstoff flüssiger Stickstoff ist.

11. Vorrichtung (1) gemäß einem der Ansprüche 1 bis 5, **dadurch gekennzeichnet, dass** die Vorrichtung eine Vorrichtung zur Verteilung von Kohlenstoffdioxid in dem flüssigen oder halbflüssigen Nahningsmittelprodukt (300) ist, und dadurch, dass der Wirkstoff (3) von sprudelnden Pellets, die aus einem Gemisch der folgenden Puder erhalten wurden, gebildet ist:
| | |
|---|---|
| -Natriumbikarbonat | 100 g |
| - Ascorbinsäure | 50 g |

12. Vorrichtung (1) gemäß einem der Ansprüche 1 bis 5, **dadurch gekennzeichnet, dass** die Vorrichtung eine Vorrichtung zur Verteilung von Kohlenstoffdioxid in dem flüssigen oder halbflüssigen Nahningsmittelprodukt ist, und dadurch, dass der Wirkstoff von Trockeneispellets gebildet ist.

13. Vorrichtung (1) gemäß einem der Ansprüche 1 bis 5, **dadurch gekennzeichnet, dass** die Vorrichtung eine Vorrichtung zur Verteilung von Schwefeldioxid in dem flüssigen oder halbflüssigen Nahrungsmittelprodukt ist, und dadurch, dass der Wirkstoff durch ein Gel, das sich aus dem folgenden Gemisch ergibt, gebildet ist:
| | |
|---|---|
| - Agarose in Lebensmittelqualität: | 20 g, |
| - Kaliumdisulfit: | 20 g, |
| - destilliertes Wasser: qs | 1000 ml. |

14. Vorrichtung (1) gemäß einem der Ansprüche 1 bis 5, **dadurch gekennzeichnet, dass** die Vorrichtung eine aktive Vorrichtung zur Verteilung von Schwefeldioxid in dem flüssigen oder halbflüssigen Nahrungsmittelprodukt ist, und dadurch, dass der Wirkstoff entweder von einem Gemisch von Sulfiten (E220-E228) mit natürlichen Polysacchariden wie zum Beispiel Agarosen, Alginaten, Stärken, Carrageenen, Cellulosen und Hemicellulosen, Fruktanen, Glucanen, Galaktanen, Glykanen oder Pektinen, oder von einem Gemisch von Sulfiten mit Proteinen wie zum Beispiel Gelatine, Ovalbumin oder Kasein gebildet ist.

15. Vorrichtung (1) gemäß einem der Ansprüche 1 bis 5, **dadurch gekennzeichnet, dass** die Kammer, in reiner oder verbundener Form, Gase wie zum Beispiel O₂, CO₂, SO₂, N₂, N₂O, Ar, He, und/oder flüchtige aromatische Moleküle wie zum Beispiel Terpene, Thiole, Methoxypyrazin, Phenylethanol, Dimetlrylsulfid, flüchtige Ester und Alkohole, gemischt mit natürlichen Einlageningsverbindungen wie zum Beispiel Agarosen, Alginaten, Stärken, Carrageenen, Cellulosen und Hemicellulosen, Fruktanen, Gummi arabicum, Xanthan-Gummi, Glucanen, Galaktanen, Glykanen, Pektinen oder Paraffin, enthält.

16. Verwendung einer Vorrichtung gemäß einem der Ansprüche 1 bis 5 oder 9 bis 15 für den Bau von aktiven Verschlüssen für verschiedene Arten von Behältnissen mit variablen Abmessungen, die dazu dienen, flüssige oder halbflüssige Nahningsmittelprodukte abzupacken.

## Claims

1. Device (1) for the controlled transfer of volatile gases or gaseous molecules into a container (200) intended to contain a liquid or semi-liquid food product (300), **characterized in that** it comprises:
- a rigid capsule (2) forming a chamber (6) whereof one longitudinal end (6a) is open, and forming a longitudinal duct (7) for the flow of the liquid or semi-liquid food product (300);
- an active product (3) contained in the said chamber (6), capable of absorbing a volatile gas and / or volatile gaseous molecules present in the said food product (300) or of diffusing a volatile gas and / or volatile gaseous molecules in this food product (300);
- a closure cap (4) for closing the said open longitudinal end (6a) of the chamber (6), comprising a penetrable septum (4c), the said cap (4) being capable, when it is placed on the said capsule (2) and its septum (4c) is not perforated, to close off the chamber (6) in such a manner that it is sealed against gases and water, and allowing, when it is perforated, for a transfer of volatile gases and / or volatile gaseous molecules between the exterior and the interior of the chamber (6); and
- a gas permeable membrane (5) permeable to the volatile gases and / or volatile gaseous molecules to be absorbed or diffused, placed in the chamber (6) in a manner so as to separate the active product (3) contained in the chamber (6) from the exterior.

2. Device (1) as claimed in claim 1, **characterized in that** the cap (4) is made out of synthetic material molded in one piece, the said septum (4c) being formed by the thinning of this synthetic material.

3. Device (1) as claimed in claim 2, **characterized in that** the capsule (2) is made out of synthetic material molded in one piece and **in that** this synthetic material and the material of which the cap (4) is constituted are heat-sealable to each other.

4. Device (1) as claimed in anyone of claims 1-3, **characterized in that** the membrane (5) is secured to the cap (4), while being attached thereto so as to be set back away from the said septum (4c) in a manner such that this latter can be perforated without perforating the membrane (5).

5. Device (1) as claimed in claim 4, **characterized in that** the said membrane is constituted of polyethylene (PE), and / or polypropylene (PP), and / or polylactic acid (PLA) and other polyesters, and / or polyamides, and / or polyvinyl alcohol polymers, and / or nylon, and / or Polyvinylidene fluoride (PVDF), and / or Polytetrafluoroethylene (PTFE), and / or Polyethersulfone (PES), and / or biopolymers (cellulose esters).

6. Closure for a container (200) intended to contain a liquid or semi-liquid food product (300), in particular in the form of a tap valve (100), **characterized in that** it comprises a receiving housing for receiving the device according to anyone of claims 1-4, arranged at the level of the upstream side of the closure, on the flow duct (102) that includes this closure and upstream of a shut-off member that includes the closure, the device (1) being placed in the housing (101) in a manner such that the longitudinal duct (7) that forms the capsule (2) communicates with the flow duct (102) that includes the closure and in such a manner that the said septum (4c) is situated on the upstream side of the closure and is accessible from the exterior of the closure.

7. Assembly formed by the device (1) according to one of claims 1 to 5 and the closure according to claim 6, **characterized in that** said capsule (2) and the portion of the closure defining said receiving housing (101) have circular cross-sections, and **in that** the capsule (2) comprises a longitudinal projection (8) adapted to be snugly inserted in the portion of the flow duct (102) that the closure includes, beyond said receiving housing (101).

8. Method for manufacturing a container designed to contain a liquid or semi-liquid food product (300) and meant to be equipped with a closure according to claim 6 or claim 7, this closure being equipped with a device (1) according to anyone of claims 1-5, **characterized in that** it includes the steps consisting of:
- inserting the device (1) into the receiving housing (101) that includes the closure, by placing this device (1) in the said housing in a manner such that the longitudinal duct (7) that forms the capsule (2) communicates with the flow duct (102) that includes the closure and in a manner such that the said septum (4c) is situated on the upstream side of the closure and is accessible from exterior of the closure;
- simultaneously with or subsequently after this insertion, perforating the said septum (4c); and
- assembling the closure, thus equipped with the device (1), on to the container, in order to enable bringing about communication between the liquid or semi-liquid food product (300) and the active product (3) contained in the chamber (6), through the perforated septum (4c) and the said membrane (5).

9. Device (1) as claimed in anyone of claims 1-5, **characterized in that** it is an absorption device for absorbing the oxygen present in the container (200) and / or in the liquid food product (300); and **in that** the said active product (3) is formed of a mixture comprising of 40% to 60% of reducing oenological tannins such as proanthocyanidins, flavonoids, gallotannins, ellagitannins, phlorotannins, in the form of powders and / or particles, wood chips or wood fragments of oak, and 60% to 40% of dry and inactivated wine yeast of the genus Saccharomyces; the said membrane (5) is permeable to oxygen and water.

10. Device (1) as claimed in anyone of claims 1-5, **characterized in that** the device is a diffusion device for diffusing nitrogen in the liquid or semi-liquid food product (300) and **in that** the said active product (3) is liquid nitrogen.

11. Device (1) as claimed in anyone of claims 1-5, **characterized in that** the device is a carbon dioxide diffusing device for diffusing carbon dioxide into the liquid or semi-liquid food product (300) and **in that** the said active product (3) is formed of effervescent granules obtained from the following powder mixture:
| | |
|---|---|
| - sodium bicarbonate (or baking soda) | 100 g |
| - ascorbic acid | 50 g. |

12. Device (1) as claimed in anyone of claims 1-5, **characterized in that** the device is a carbon dioxide diffusing device for diffusing carbon dioxide into the liquid or semi-liquid food product, and **in that** the said active product is formed of dry ice granules.

13. Device (1) as claimed in anyone of claims 1-5, **characterized in that** the device is a sulfur dioxide diffusing device for diffusing sulfur dioxide into the liquid or semi-liquid food product; the said active product is formed by a gel resulting from the following mixture:
| | |
|---|---|
| - agarose food grade: | 20 g, |
| - potassium metabisulfite: | 20 g, |
| - distilled water: qsp (quantity sufficient for) | 1000 ml. |

14. Device (1) as claimed in anyone of claims 1-5, **characterized in that** the device is an active sulfur dioxide diffusing device in the liquid or semi-liquid food product; and **in that** the said active product is formed from either a mixture of one or more sulphites (E220 to E228) with natural polysaccharides, such as alginates, or starches, or carrageenans, or celluloses and hemicelluloses, or fructans, or arabic gum, or xanthan gum, or glucans, or galactans, or glycans, or pectins, or of a mixture of sulphites with proteins such as for example gelatin, albumin or casein.

15. Device (1) as claimed in anyone of claims 1-5, **characterized in that** said chamber contains, in pure or combined forms, gases such as O₂, CO₂, SO₂, N₂, N₂O, Ar, He, and / or volatile aromatic molecules such as terpenols, thiols, methoxypyrazine, phenylethanol, dimethyl sulfide, volatile esters and alcohols, mixed with natural sequestering compounds such as agaroses, alginates, starches, carrageenans, celluloses and hemicelluloses, fructans, gum arabic, xanthan, glucans, galactans, glycans, pectins, or paraffin.

16. Use of a device according to anyone of claims 1-5 or 9-15 in making active closures for various types of containers of various dimensions used for appropriately storing liquid or semi-liquid food products.
